# DEMANDE DE BREVET EUROPEEN

(11) **EP 1 382 641 A1**
(43) Date de publication de la demande: **21.01.2004**
(21) Numéro de dépôt: 03291773.4
(22) Date de dépôt: 17.07.2003
(51) Int. Cl.: C08L 67/02, C08L 101/00, C08L 75/06, G02B 6/44

(54) **Unité optique comprenant une gaine particulière**

(30) Priorité: 19.07.2002 FR 0209204
(71) Demandeur: Acome Société Cooperative De Production, Société Anonyme, A Capital Variable, 75008 Paris (FR)
(72) Inventeur: Lagreve, Christian, 61100 La Chapelle Biche (FR); Fermin, Christian, 50600 Chevreville (FR)
(74) Mandataire: Doressamy, Clarisse

(57) **Abrégé**

L'invention a pour objet une unité optique (1) pour câble à fibres optiques, ladite unité (1) comprenant une pluralité de fibres optiques (3) et étant entourée d'au moins une gaine (2), ladite gaine (2) étant caractérisée en ce qu'elle comprend :
- de 55 à 95 pcr d'au moins un matériau élastomère thermoplastique,
- de 5 à 45 pcr d'au moins une polyoléfine, ladite polyoléfine possédant une température de fusion inférieure ou égale à 100°C,
- de 10 à 120 pcr d'au moins une charge minérale, et
- de 0 (exclu) à 6 pcr d'au moins un agent de mise en oeuvre ou agent glissant,
le matériau constituant la gaine (2) possèdant une température de fusion supérieure ou égale à 170°C, l'unité « pcr » étant un « pour cent de résines » (en poids).

L'invention concerne aussi le procédé de fabrication d'une telle unité optique (1).

## Description

L'invention concerne une unité optique pour câble à fibres optiques comprenant une pluralité de fibres optiques entourée d'au moins une gaine, ainsi que le procédé de fabrication d'une telle unité.

Les câbles optiques comprennent généralement une gaine extérieure de câble entourant au moins une zone de protection dans laquelle s'étendent des unités optiques de transmission. Ces unités optiques, appelées aussi tubes compacts, sont constituées principalement de tubes contenant une pluralité de fibres optiques seules (cas d'un tube sec) ou une pluralité de fibres optiques entourées de gelée (cas d'un tube gras).

Des compositions de gaines de telles unités optiques flexibles en PVC (Poly Vinyle Chlorure) ou bien en copolymère propylène et éthylène ou bien en mélange de polyéthylène et de ses copolymères, chargé d'hydroxyde de magnésium ou d'hydrate d'alumine, sont couramment utilisées en câbleries. Lorsque le tube est gras, se pose un problème de migration de gelée à travers le matériau constituant la gaine, compte tenu de la faible épaisseur du matériau (de l'ordre de 100 µm) . Cela peut engendrer certains soucis d'adhérence lors de l'assemblage des unités optiques pour la réalisation d'un câble à fibres optiques.

D'autre part, dans la demande de brevet FR-A-2.809.499, il est décrit des unités, ou modules, comprenant une gaine, ou peau, en élastomère thermoplastique à segments souples diols, dont le point de fusion est supérieur à 130°C et dont la résistance initiale au déchirement est inférieure à 120 kN/m. Par exemple ledit élastomère est un polyester. Dans tous ces cas, les unités sont dites ou décrites comme pouvant être déchirées aisément avec les doigts pour accéder aux fibres.

Cependant, de telles gaines posent de nombreux problèmes pour une fabrication à l'échelle industrielle. En effet, les gaines décrites posent tout d'abord le problème d'un retrait important lors de la fabrication desdites unités par extrusion du matériau constituant la gaine, c'est-à-dire qu'après extrusion le matériau se rétracte dans l'axe de l'extrusion dans un sens identique au sens de circulation des fibres. Ce retrait est en particulier important lorsque le tube est sec.

D'autre part, le problème se pose aussi de dépôts superflus du matériau constituant la gaine, en particulier en termes d'irrégularité du diamètre du cône d'extrusion et de dépôts de charges en sortie de filière, typiquement dans le cas d'une application par extrusion.

Enfin, des défauts de qualité de transmission des fibres optiques peuvent être occasionnés par l'adhérence du matériau constituant la gaine sur les fibres optiques et/ou le retrait important dudit matériau notamment dans le cas d'un tube sec.

Les unités optiques selon la demande de brevet FR-A-2.809.499 sont en fin de compte peu facilement déchirables, c'est-à-dire que l'accès aux fibres optiques est malaisé, lors de l'accès en plein câble (en anglais « mid-span access »).

L'ensemble de ces défauts donne finalement un impact non négligeable du matériau constituant la gaine sur le coût et la productivité de la fabrication des unités optiques, plus spécialement dans le cas de fabrication d'unités optiques à grande vitesse, par exemple de 100 à 1200 m/mn, de préférence de 300 à 1000 m/mn.

Par suite, il subsiste le besoin de pouvoir déchirer les gaines des unités optiques facilement, tout en ayant un matériau constituant la gaine d'unité optique qui permette une fabrication continue et aisée, à grande vitesse. L'unité optique selon l'invention permet avantageusement de répondre à ce besoin.

L'unité optique selon l'invention est une unité optique pour câble à fibres optiques, ladite unité comprenant une pluralité de fibres optiques et étant entourée d'au moins une gaine, ladite gaine étant caractérisée en ce qu'elle comprend :
- de 55 à 95 pcr, de préférence de 60 à 90 pcr, de façon encore plus préférée de 65 à 85 pcr, d'au moins un matériau élastomère thermoplastique,
- de 5 à 45 pcr, de préférence de 10 à 40 pcr, de façon encore plus préférée de 15 à 35 pcr, d'au moins une polyoléfine, ladite polyoléfine possédant une température de fusion inférieure ou égale à 100°C,
- de 10 à 120 pcr, de préférence de 30 à 90 pcr, d'au moins une charge minérale, et
- de 0 (exclu) à 6 pcr, de préférence de 0,1 à 6 pcr, de façon encore plus préférée de 1 à 5 pcr, d'au moins un agent de mise en oeuvre ou agent glissant,
le matériau constituant la gaine possédant une température de fusion supérieure ou égale à 170°C, l'unité « pcr » étant un « pour cent de résines » (en poids).

Par « résine » on entend « polymère » au sens de la présente invention. L'unité « pcr » s'entend donc selon l'invention comme un pourcentage par rapport au poids total de résines, c'est-à-dire de matériau élastomère thermoplastique et de polyoléfine, et éventuellement d'autre(s) résine(s).

Ainsi le matériau constituant la gaine d'unité optique selon l'invention comprend au moins un matériau élastomère thermoplastique, au moins une polyoléfine, au moins une charge minérale et au moins un agent glissant.

De façon avantageuse, l'unité optique selon l'invention permet d'obtenir un retrait réduit, lors de sa fabrication, en particulier lors de sa fabrication par extrusion.

La structure de la gaine selon l'invention permet en outre avantageusement d'obtenir une déchirabilité aisée y compris lors d'un accès à l'unité optique en milieu de câble optique (« mid-span access »).

Sans vouloir entrer dans le mécanisme qui est mis en jeu, il semble bien que, même si l'élastomère thermoplastique et la polyoléfine ne sont généralement pas miscibles, il existe une compatibilité suffisante entre ces deux polymères et la charge minérale qui permet l'obtention d'un matériau suffisamment résistant aux opérations d'assemblage et de câblage. D'autre part la déchirabilité aisée, tout particulièrement en accès « mid-span access », est attribuée entre autres à la présence de fibres de polyoléfines au sein d'une matrice continue d'élastomère thermoplastique, qui se sont orientées dans le sens de l'extrusion sous l'effet du cisaillement lors de la fabrication de ladite unité optique selon l'invention.

Le matériau élastomère thermoplastique possède généralement une dureté Shore D (mesurée selon la norme ASTM D 2240) supérieure ou égale à 40 D.

La polyoléfine possède de préférence une température de fusion inférieure ou égale à 90°C.

Le matériau constituant la gaine possède généralement un indice de fluidité à chaud inférieur à 4g/10mn (mesuré selon la norme ASTM D 1238, à 2,16 kg à 190°C, pour un matériau de température de fusion inférieure à 190°C) ou inférieur à 53g/10mn (mesuré selon la norme ASTM D 1238, à 5 kg à 250°C, pour un matériau de température de fusion supérieure à 190°C). Il possède généralement une dureté Shore D (mesurée selon la norme ASTM D 2240) supérieure ou égale à 40 D.

Le matériau élastomère thermoplastique est de préférence choisi dans le groupe formé par les polyéther ester, les polyester ester et les polyuréthanne ester. A titre d'exemple, ledit matériau thermoplastique est de façon préférée choisi parmi les copolymères de Poly Butylène Téréphtalate (PBT) et de polyéthers. Un exemple commercial d'un tel matériau élastomère thermoplastique est le produit Hytrel® commercialisé par la société Dupont de Nemours, ou bien le produit Arnitel®, commercialisé par la société DSM.

La polyoléfine est généralement polaire, le plus souvent choisie dans le groupe formé par les acrylates et les vinylacétates. De préférence, la polyoléfine est généralement choisie dans le groupe formé par les copolymères Ethylène Méthyl Acrylate (EMA), Ethylène Ethyl Acrylate (EEA), Ethylène Butyl Acrylate (EBA), Ethylène Vinyl Acétate (EVA), Ethylène Ethyl Hexyl Acrylate (EHA), et dans le groupe des polyéthylènes et leurs copolymères greffés anhydride maléique ou dans le groupe des terpolymères comprenant de l'éthylène, des acrylates, et de l'anhydride maléique ou du méthacrylate de glycidyle. Dans de tels copolymères le pourcentage, en poids, d'acrylate et/ou de vinylacétate, par rapport au poids total de copolymère, est généralement de 9 à 35 %, par exemple égal à 24%.

La charge minérale est généralement choisie dans le groupe formé par la silice, le kaolin, l'aluminium, l'argile, le talc, la craie, l'oxyde de titane, l'hydroxyde de magnésium et les carbonates de calcium et de magnésium dont la dolomie, et leurs mélanges. De préférence la charge minérale est choisie dans le groupe formé par les carbonates de calcium et de magnésium dont la dolomie. De façon encore plus préférée la charge minérale comprend principalement de la dolomie, et de préférence c'est de la dolomie. La dolomie est composée de dolomite (carbonate naturel de calcium et de magnésium, CaMg(CO₃)₂). La granulométrie de la charge minérale est généralement telle que pas plus de 100 ppm (partie par million ou 10⁻⁶) des particules constituant essentiellement ladite charge ont une taille moyenne de particule supérieure à 50 µm, de préférence supérieure à 40 µm, de façon encore plus préférée supérieure à 30 µm.

L'agent de mise en oeuvre ou agent glissant est un agent permettant, lors d'une fabrication par extrusion, d'obtenir un glissement du matériau constituant la gaine de l'unité optique, à la paroi de la filière d'extrusion. Cet agent permet généralement d'éviter les ruptures d'extrusion, source de déchets, et améliore l'aspect de surface de la gaine de l'unité optique. Il est généralement à base de silicone ou de fluor, par exemple un dérivé fluoré tel qu'un élastomère fluoré. Un exemple d'un tel agent est le produit commercial siliconé MB50/010 de la société DOW CORNING.

L'invention concerne aussi un procédé de fabrication de l'unité optique selon l'invention, comprenant une étape d'application d'au moins une gaine comprenant :
- de 55 à 95 pcr, de préférence de 60 à 90 pcr, de façon encore plus préférée de 65 à 85 pcr, d'au moins un matériau élastomère thermoplastique,
- de 5 à 45 pcr, de préférence de 10 à 40 pcr, de façon encore plus préférée de 15 à 35 pcr, d'au moins une polyoléfine,
- de 10 à 120 pcr, de préférence de 30 à 90 pcr, d'au moins une charge minérale,
- de 0 (exclu) à 6 pcr, de préférence de 0,1 à 6 pcr, de façon encore plus préférée de 1 à 5 pcr, d'au moins un agent de mise en oeuvre ou agent glissant, l'unité « pcr » étant un « pour cent de résines » (en poids), sur la pluralité de fibres optiques. De préférence l'application de la gaine est réalisée par extrusion.

Avantageusement, le procédé selon l'invention permet, lorsque l'application de la gaine est réalisée par extrusion, la réalisation d'unités optiques sous la forme de tubes réguliers et suffisamment rigides à chaud (i.e. à la température d'extrusion, typiquement de 200 à 240°C) pour obtenir des tubes parfaitement cylindriques. Ceci permet de façon particulièrement avantageuse de réaliser leur extrusion à grande vitesse, typiquement de 100 à 1200 m/min, de préférence de 300 à 1000 m/min, et sous une très fine épaisseur généralement de 80 à 200 µm, par exemple environ 100µm, le tout avec une régularité nécessaire pour garantir au produit de bonnes qualités.

D'autre part, lorsque l'unité optique est un tube sec, l'invention permet avantageusement l'absence d'adhérence du matériau constituant la gaine sur les fibres.

Avantageusement, la nature du matériau constituant la gaine de l'unité optique selon l'invention permet, du fait de sa dureté, une large diminution du coefficient de frottement et donc un risque moindre de rupture de la gaine de l'unité optique pendant l'assemblage d'un procédé de fabrication d'un câble comprenant l'unité optique selon l'invention. En effet, lors de leur assemblage, les unités optiques sont soumises à d'importants frottements générés par le passage dans des trous et inversion de rotation de ces trous nécessaire à l'obtention d'une structure SZ, qui est la structure préférée pour un câble à fibres optiques. La structure SZ correspond à une inversion périodique du sens d'assemblage des unités optiques, définissant le pas d'assemblage ainsi qu'il est connu de l'homme du métier. Les unités optiques peuvent donc être soumises à d'importantes forces ou des forces différentielles qui peuvent générer des différences de longueur intolérables pour la qualité du câble à fibres optiques.

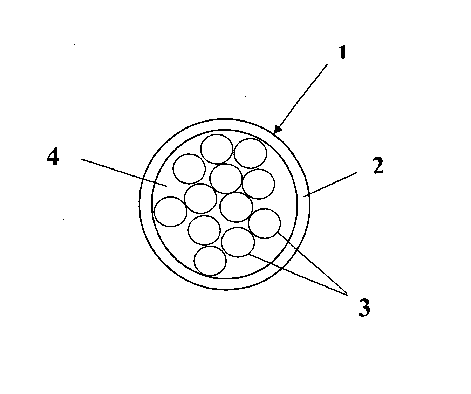

L'invention sera mieux comprise et d'autres caractéristiques et avantages apparaîtront à la lecture de la description qui va suivre, donnée à titre non limitatif, par référence à la figure.

La figure représente une vue schématique en coupe d'une unité optique selon l'invention. Une gaine 2 entoure une pluralité de fibres optiques 3. Un espace 4 entre les fibres 2 est ici laissé libre, c'est-à-dire que l'unité optique 1 entre dans la catégorie des tubes secs. La gaine 3 est appliquée sur la pluralité de fibres 2 par exemple par extrusion. L'épaisseur de la gaine 2 est faible, par exemple égale à 100 µm.

L'exemple qui suit illustre l'invention sans pour autant en limiter la portée.

### EXEMPLE

Un matériau constituant un alliage est extrudé sur une extrudeuse double. Sa composition est la suivante:
- 82 pcr de Hytrel® (polyester thermoplastique souple, constitué de segments rigides type PBT, assouplis par des segments de types polyéthers), G4074, de dureté 40D
- 18 pcr de EMA 24 MA 005 (copolymère constitué d'éthylène et d'acrylate de méthyle, avec 24% en poids d'Acrylate de méthyle)
- 80 pcr de dolomie, et
- 4 pcr d'un agent de mise en oeuvre à base de silicone (MB 50/010 de DOW CORNING)

L'EMA 24 MA 005 est un polymère à bas point de fusion (70°C). La température de fusion du matériau constituant la gaine ainsi exemplifié est de 170°C, sa dureté est de 45D, et son indice de fluidité est de 1,2 g/ 10 mn.

Ce matériau est utilisé pour fabriquer une gaine de fibre optique. On fabrique en appliquant par extrusion le matériau précédent sur des fibres optiques une unité optique (1) telle que représentée sur la figure. A titre d'exemple l'unité optique (1) possède les caractéristiques suivantes : épaisseur de la gaine (2) : 100 µm, nombre de fibres optiques : 12, diamètre des fibres optiques : 245 µm, et diamètre de l'unité optique 1,3 mm. On constate une bonne aptitude à la déchirabilité de la gaine d'unité optique ainsi fabriquée.

A titre de comparaison, une autre unité optique comparative est fabriquée de la même façon, mais telle que décrite dans la demande de brevet français FR-A-2.809.499, la gaine de l'unité optique étant formée de 100% d'Hytrel® G3548L. Alors on constate la non faisabilité industrielle de l'unité optique, le matériau étant adhérent aux fibres optiques. Quelques tentatives d'explication sont données ci-après. Cette constatation de non faisabilité industrielle est attribuée au caractère fluide et très collant à chaud de l'Hytrel® . Du point de vue du procédé, le cône d'extrusion de ladite gaine est très petit, ce qui est source de nombreuses ruptures d'extrudat dues notamment au collage intempestif du matériau avant son refroidissement. Du point de vue de l'assemblage, la faible dureté et le caractère très élastomérique du matériau induit un coefficient de frottement élevé notamment sur les poulies d'assemblage. Les tubes qui ont quand même été (difficilement) réalisés se sont avérés indéchirables en « mid-span access ».

## Revendications

1. Unité optique (1) pour câble à fibres optiques (3), ladite unité (1) comprenant une pluralité de fibres optiques (3) et étant entourée d'au moins une gaine (2), ladite gaine (2) étant **caractérisée en ce qu'**elle comprend :
• de 55 à 95 pcr, de préférence de 60 à 90 pcr, de façon encore plus préférée de 65 à 85 pcr, d'au moins un matériau élastomère thermoplastique,
• de 5 à 45 pcr, de préférence de 10 à 40 pcr, de façon encore plus préférée de 15 à 35 pcr, d'au moins une polyoléfine, ladite polyoléfine possédant une température de fusion inférieure ou égale à 100°C,
• de 10 à 120 pcr, de préférence de 30 à 90 pcr, d'au moins une charge minérale, et
• de 0 (exclu) à 6 pcr, de préférence de 0,1 à 6 pcr, de façon encore plus préférée de 1 à 5 pcr, d'au moins un agent de mise en oeuvre ou agent glissant,
le matériau constituant la gaine (2) possèdant une température de fusion supérieure ou égale à 170°C, l'unité « pcr » étant un « pour cent de résines » (en poids).

2. Unité selon la revendication 1 dans laquelle le matériau élastomère thermoplastique possède une dureté Shore D supérieure ou égale à 40 D.

3. Unité selon l'une des revendications 1 ou 2 dans laquelle la polyoléfine possède une température de fusion inférieure ou égale à 90°C.

4. Unité selon l'une des revendications 1 à 3 telle que le matériau constituant la gaine (2) possède un indice de fluidité à chaud inférieur à 4g/10mn (mesuré selon la norme ASTM D 1238, à 2,16 kg à 190°C, pour un matériau de température de fusion inférieure à 190°C) ou inférieur à 53g/10mn (mesuré selon la norme ASTM D 1238, à 5 kg à 250°C, pour un matériau de température de fusion supérieure à 190°C), et une dureté Shore D (mesurée selon la norme ASTM D 2240) supérieure ou égale à 40 D.

5. Unité selon l'une des revendications 1 à 4 telle que le matériau élastomère thermoplastique est choisi dans le groupe formé par les polyéther ester, les polyester ester et les polyuréthanne ester, de préférence choisi parmi les copolymères de Poly Butylène Téréphtalate (PBT) et de polyéthers.

6. Unité selon l'une des revendications 1 à 5 dans laquelle la polyoléfine est choisie dans le groupe formé par les acrylates et les vinylacétates, de préférence choisie dans le groupe formé par les copolymères Ethylène Méthyl Acrylate (EMA), Ethylène Ethyl Acrylate (EEA), Ethylène Butyl Acrylate (EBA), Ethylène Vinyl Acétate (EVA), et Ethylène Ethyl Hexyl Acrylate (EHA), et dans le groupe des polyéthylènes et leurs copolymères greffés anhydride maléique ou dans le groupe des terpolymères comprenant de l'éthylène, des acrylates, et de l'anhydride maléique ou du méthacrylate de glycidyle.

7. Unité selon l'une des revendications 1 à 6 telle que La charge minérale est choisie dans le groupe formé par la silice, le kaolin, l'aluminium, l'argile, le talc, la craie, l'oxyde de titane, l'hydroxyde de magnésium et les carbonates de calcium et de magnésium dont la dolomie, et leurs mélanges ; de préférence dans le groupe formé par les carbonates de calcium et de magnésium dont la dolomie, de façon encore plus préférée la charge minérale comprend principalement de la dolomie.

8. Procédé de fabrication d'une unité (1) pour câble à fibres optiques (3) selon l'une des revendications 1 à 7, comprenant une étape d'application d'au moins une gaine (2) comprenant :
• de 55 à 95 pcr, de préférence de 60 à 90 pcr, de façon encore plus préférée de 65 à 85 pcr, d'au moins un matériau élastomère thermoplastique,
• de 5 à 45 pcr, de préférence de 10 à 40 pcr, de façon encore plus préférée de 15 à 35 pcr, d'au moins une polyoléfine,
• de 10 à 120 pcr, de préférence de 30 à 90 pcr, d'au moins une charge minérale,
• de 0 (exclu) à 6 pcr, de préférence de 0,1 à 6 pcr, de façon encore plus préférée de 1 à 5 pcr, d'au moins un agent de mise en oeuvre ou agent glissant, l'unité « pcr » étant un « pour cent de résines » (en poids),
sur la pluralité de fibres optiques (3).

9. Procédé selon la revendication précédente tel que l'application de la gaine (2) est réalisée par extrusion.
